(19) Europäisches Patentamt / European Patent Office / Office européen des brevets

(11) **EP 4 227 390 A1**

(12) **EUROPEAN PATENT APPLICATION**
published in accordance with Art. 153(4) EPC

(43) Date of publication:
**16.08.2023 Bulletin 2023/33**

(21) Application number: **21877688.8**

(22) Date of filing: **07.10.2021**

(51) International Patent Classification (IPC):
*C10N 30/00* (2006.01)   *C10N 40/30* (2006.01)
*C10M 105/38* (2006.01)   *C10M 107/24* (2006.01)
*C10M 107/34* (2006.01)   *C10M 107/38* (2006.01)
*C10M 107/50* (2006.01)   *F25B 1/00* (2006.01)
*C09K 5/04* (2006.01)

(52) Cooperative Patent Classification (CPC):
**C09K 5/04; C10M 105/38; C10M 107/24;
C10M 107/34; C10M 107/38; C10M 107/50;
F25B 1/00;** C10N 2030/00; C10N 2040/30

(86) International application number:
**PCT/JP2021/037080**

(87) International publication number:
**WO 2022/075389 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2020   JP 2020171237
25.12.2020   JP 2020217947**

(71) Applicant: **Daikin Industries, Ltd.
Osaka-shi, Osaka 530-0001 (JP)**

(72) Inventors:
• **GOTOU, Tomoyuki
Osaka-shi, Osaka 530-0001 (JP)**

• **YOSHIMURA, Takashi
Osaka-shi, Osaka 530-0001 (JP)**
• **USUI, Takashi
Osaka-shi, Osaka 530-0001 (JP)**
• **ITO, Yuuko
Osaka-shi, Osaka 530-0001 (JP)**
• **WATANABE, Yuka
Osaka-shi, Osaka 530-0001 (JP)**
• **TAKAKURA, Youhei
Osaka-shi, Osaka 530-0001 (JP)**
• **IWASAKA, Takuma
Osaka-shi, Osaka 530-0001 (JP)**

(74) Representative: **Hoffmann Eitle
Patent- und Rechtsanwälte PartmbB
Arabellastraße 30
81925 München (DE)**

(54) **REFRIGERANT-CONTAINING COMPOSITION**

(57)    An object of the present disclosure is to provide a composition in which a disproportionation reaction of a refrigerant is suppressed, and in which the refrigerant has excellent stability. Another object of the present disclosure is to provide a composition comprising a refrigerant useful for air-conditioning systems. The composition comprises a refrigerant, wherein the refrigerant comprises a refrigerant that undergoes disproportionation and a refrigerant that does not undergo disproportionation.

EP 4 227 390 A1

Fig. 2

$y = -1.5761x + 3.9516$

× A disproportionation reaction occurs.

○ A disproportionation reaction is suppressed.

log (concentration (mol/m³) of the refrigerant that undergoes disproportionation in a gas phase)

log (thermal diffusivity (mm²/s) of the entire refrigerant)

**Description**

Technical Field

The present disclosure relates to a composition comprising a refrigerant.

Technical Field

Patent Literature (PTL) 1 discloses a working medium for heat cycle containing an azeotrope-like composition comprising trifluoroethylene (HFO-1123) and difluoromethane (HFC-32) .

PTL 2 discloses a compressor that uses a refrigerant comprising trifluoroethylene (HFO-1123) as a working fluid, uses a polyvinyl ether oil as a lubricant for the compressor, and is provided with a compression chamber bi-directionally formed by engaging a fixed scroll with a spiral lap rising from a mirror plate with an orbiting scroll, the compression chamber having an injection hole.

PTL 3 discloses a refrigeration cycle apparatus comprising a refrigerant circuit in which a refrigerant that contains 40 wt% or more of trifluoroethylene (HFO-1123) and that is likely to cause a chain reaction of disproportionation reaction with an increase in the pressure circulates, the refrigerant circuit being connected to a compressor, a first heat exchanger, an expansion mechanism, and a second heat exchanger, and comprising a control mechanism comprising in a container of the compressor an auto-resettable pressure fuse that interrupts the energization between an electric element of the compressor and an external power supply by interrupting a neutral point of three-phase stator windings connected in Y-connection in the electric element of the compressor when the pressure of the refrigerant in a flow path from the compressor of the refrigerant circuit to the expansion mechanism reaches a threshold value, so as to prevent explosion due to the chain reaction of disproportionation reaction of the refrigerant.

Citation List

Patent Literature

PTL 1: JP2015-145452A
PTL 2: JP2015-214927A
PTL 3: JP2018-112396A

Summary of Invention

Technical Problem

An object of the present disclosure is to provide a composition in which a disproportionation reaction of a refrigerant is suppressed, and in which the refrigerant has excellent stability.

Another object of the present disclosure is to provide a composition comprising a refrigerant useful for air-conditioning systems.

Solution to Problem

The present disclosure provides the invention according to the following embodiments.

Item 1.

A composition comprising a refrigerant,

wherein the refrigerant comprises a refrigerant that undergoes disproportionation and a refrigerant that does not undergo disproportionation,
the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 2.

A composition comprising a refrigerant,

wherein the refrigerant comprises a refrigerant that undergoes disproportionation and a refrigerant that does not undergo disproportionation,
the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 3.

The composition according to Item 1 or 2,
wherein the refrigerant that does not undergo disproportionation comprises at least one component selected from the group consisting of 3,3,3-trifluoropropene (HFO-1243zf), trifluoroiodomethane (CF$_3$I), difluoromethane (HFC-32), 2,3,3,3-tetrafluoropropene (HFO-1234yf), trans-1,3,3,3-tetrafluoropropene (HFO-1234ze(E)), hexafluoropropene (FO-1216), perfluoromethane (PFC-14), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), cis-1,2,3,3,3-pentafluoropropene (HFO-1225ye(Z)), trans-1,2,3,3,3-pentafluoropropene (HFO-1225ye(E)), CF$_3$SCF$_3$, propane, cyclopropane, propylene, isobutene, isobutane, carbon dioxide, and ammonia.

Item 4.

The composition according to any one of Items 1 to 3, which is for use as a refrigeration oil-containing working fluid, the composition further comprising a refrigeration oil.

Item 5.

The composition according to Item 4, wherein the refrigeration oil contains at least one polymer selected from the group consisting of polyalkylene glycol (PAG), polyol ester (POE), polyvinyl ether (PVE), silicone oil, and fluorine-containing oil.

Item 6.

The composition according to any one of Items 1 to 5, which is for use in an air-conditioning system.

Item 7.

An air-conditioning system comprising the composition of any one of Items 1 to 6.

Item 8.

A refrigeration method comprising operating a refrigeration cycle using the composition of any one of Items 1 to 6.

Item 9.

A method for operating a refrigeration apparatus that operates a refrigeration cycle using the composition of any one of Items 1 to 6.

Item 10.

A refrigeration apparatus comprising the composition of any one of Items 1 to 6.

Item 11.

The refrigeration apparatus according to Item 10, which is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.

Item 12.

A method for storing a composition comprising a refrigerant,

the refrigerant comprising a refrigerant that undergoes disproportionation and a refrigerant that does not undergo disproportionation, and
the refrigerant that undergoes disproportionation comprising at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114),
the method comprising setting the refrigerant to satisfy the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 13.

A method for storing a composition comprising a refrigerant,

the refrigerant comprising a refrigerant that undergoes disproportionation and a refrigerant that does not undergo disproportionation, and
the refrigerant that undergoes disproportionation comprising at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114),
the method comprising setting the refrigerant to satisfy the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 14.

A method for mixing refrigerants,

the method comprising mixing a refrigerant that undergoes disproportionation and a refrigerant that does not undergo disproportionation as the refrigerants,
wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 15.

A method for mixing refrigerants,

the method comprising mixing a refrigerant that undergoes disproportionation and a refrigerant that does not undergo disproportionation as the refrigerants,
wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 16.

A method for suppressing a disproportionation reaction of a refrigerant,

the method comprising mixing a refrigerant that undergoes disproportionation and a refrigerant that does not undergo disproportionation as the refrigerant,
wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Item 17.

A method for suppressing a disproportionation reaction of a refrigerant,

the method comprising mixing a refrigerant that undergoes disproportionation and a refrigerant that does not undergo disproportionation as the refrigerant,

wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and

the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and

y represents a common logarithm (log) of thermal diffusivity (mm$^2$/s) of the entire refrigerant in the composition.

Advantageous Effects of Invention

In the composition comprising a refrigerant according to the present disclosure, the refrigerant is prevented from undergoing a disproportionation reaction and has excellent stability.

The composition comprising a refrigerant according to the present disclosure is useful for air-conditioning systems.

Brief Description of Drawings

Fig. 1 is a graph showing the conditions under which an air-conditioning system is operated using the composition comprising a refrigerant according to the present disclosure.

Fig. 2 is a graph showing the conditions under which an air-conditioning system is operated using the composition comprising a refrigerant according to the present disclosure.

Description of Embodiments

The present inventors conducted extensive research to solve the above problem and consequently found that, in an air-conditioning system in which a composition comprising a refrigerant is used, if the refrigerant comprises a refrigerant that undergoes disproportionation and a refrigerant that does not undergo disproportionation, and if the operation is performed under conditions in which the entire refrigerant of the composition satisfies a specific relational formula, the occurrence of disproportionation reaction of the refrigerant used in the air-conditioning system is suppressed.

The present disclosure has been completed as a result of further research based on the findings.

Below, embodiments encompassed by the present disclosure will be described in detail.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given.

Refrigerants are broadly divided into fluorocarbon compounds and non-fluorocarbon compounds in terms of the structure of the compounds. Fluorocarbon compounds include hydrochlorofluorocarbons (HCFC) and hydrofluorocarbons (HFC). Non-fluorocarbon compounds include propane (R290), propylene (R1270), butane (R600), isobutane (R600a), and the like.

In the present specification, the phrase "composition comprising a refrigerant" at least includes (1) a refrigerant itself (including a mixture of refrigerants (refrigerant mixtures)), (2) a composition that further comprises other components and that can be mixed with at least a refrigeration oil to obtain a working fluid for a refrigerating machine, and (3) a working fluid for a refrigerating machine containing a refrigeration oil (refrigeration working fluid).

In the present specification, of these three embodiments, the composition (2) is referred to as a "refrigerant composition" so as to distinguish it from a refrigerant itself (including a mixture of refrigerants).

Further, in the present specification, the working fluid for a refrigerating machine (3) is referred to as a "refrigeration oil-containing working fluid" (working fluid containing refrigeration oil) so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment.

In other words, this type of alternative means that the same equipment is operated with an alternative refrigerant. Embodiments of this type of "alternative" include drop-in alternatives, nearly drop-in alternatives, and retrofits, in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" (refrigerator) refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the terms "comprise," "contain," and "include" encompass the concepts of containing, including, consisting essentially of, and consisting of.

In the present specification, when a numerical range is stated in steps, the upper-limit value or the lower-limit value of one numerical range can be randomly combined with the upper-limit value or the lower-limit value of another numerical range.

In the present specification, the upper-limit values or the lower-limit values of the numerical ranges stated in the present specification may be replaced with a value shown in the Examples or a value that can be unambiguously derived from the Examples.

In the present specification, the following terms are as described below.

Examples of Refrigerant That Undergoes Disproportionation Trans-1,2-difluoroethylene: HFO-1132(E) ((E)-1,2-difluoroethylene)

Cis-1,2-difluoroethylene: HFO-1132(Z) ((Z)-1,2-difluoroethylene) (E) and/or (Z)-1,2-difluoroethylene: HFO-1132(E/Z)

The expression "(E/Z)" means that the E (trans) and/or Z (cis) forms are included.

1,1-Difluoroethylene: HFO-1132a
Trifluoroethylene: HFO-1123
Tetrafluoroethylene: FO-1114

Examples of Refrigerant That Does Not Undergo Disproportionation

3,3,3-Trifluoropropene: HFO-1243zf
Trifluoroiodomethane: $CF_3I$
Difluoromethane: HFC-32
2,3,3,3-Tetrafluoropropene: HFO-1234yf
Trans-1,3,3,3-tetrafluoropropene: HFO-1234ze(E)
Hexafluoropropene: FO-1216
Perfluoromethane: PFC-14
Pentafluoroethane: HFC-125
1,1,2,2-Tetrafluoroethane: HFC-134
1,1,1,2-Tetrafluoroethane: HFC-134a
1,1,1-Trifluoroethane: HFC-143a
1,1-Difluoroethane: HFC-152a
Fluoroethane: HFC-161
1,1,1,2,3,3,3-Heptafluoropropane: HFC-227ea
Trans-1,2,3,3,3-pentafluoropropene: HFO-1225ye(E)

Cis-1,2,3,3,3-pentafluoropropene: HFO-1225ye(Z)
(E) and/or (Z)-1,2,3,3,3-pentafluoropropene: HFO-1225ye(E/Z)

The expression "(E/Z)" means that the E (trans) and/or Z (cis) forms are included.

$$CF_3SCF_3$$

Propane: R290
Cyclopropane
Propylene: R1270
Isobutene
Isobutane: R600a
Carbon dioxide: R744
Ammonia: R717

[1] Composition

(1) Refrigerant

The composition according to the present disclosure comprises a refrigerant, the refrigerant comprising a refrigerant that undergoes disproportionation and a refrigerant that does not undergo disproportionation.

Of the refrigerants, the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114).

Of the refrigerants, the refrigerant that does not undergo disproportionation preferably comprises at least one component selected from the group consisting of 3,3,3-trifluoropropene (HFO-1243zf), trifluoroiodomethane ($CF_3I$), difluoromethane (HFC-32), 2,3,3,3-tetrafluoropropene (HFO-1234yf), trans-1,3,3,3-tetrafluoropropene (HFO-1234ze(E)), hexafluoropropene (FO-1216), perfluoromethane (PFC-14), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), cis-1,2,3,3,3-pentafluoropropene (HFO-1225ye(Z)), trans-1,2,3,3,3-pentafluoropropene (HFO-1225ye(E)), $CF_3SCF_3$, propane, cyclopropane, propylene, isobutene, isobutane, carbon dioxide, and ammonia.

The refrigerant satisfies the range represented by the formula:

$$y < -1.5761x + 3.9516,$$

wherein x represents the common logarithm (log) of the concentration (mol/m$^3$) of the refrigerant that undergoes disproportionation in a gas phase of the composition according to the present disclosure, and
y represents the common logarithm (log) of thermal diffusivity (mm$^2$/s) of the entire refrigerant in the composition.

The refrigerant satisfies the range represented by the formula:

$$y < -1.4941x + 3.6044,$$

wherein x represents the common logarithm (log) of the concentration (mol/m$^3$) of the refrigerant that undergoes disproportionation in a gas phase of the composition according to the present disclosure, and
y represents the common logarithm (log) of thermal diffusivity (mm$^2$/s) of the entire refrigerant in the composition.

The "entire refrigerant" indicates the sum of the refrigerant that undergoes disproportionation and the refrigerant that does not undergo disproportionation. In the composition according to the present disclosure, the refrigerant for use is composed of a refrigerant that undergoes disproportionation and a refrigerant that does not undergo disproportionation.

In the present disclosure, the method for producing a refrigerant to be contained in the composition according to the present disclosure is not limited. For example, various refrigerants can be produced by known production methods. HFO-1132(E/Z) for use as a refrigerant can be produced by a dehydrofluorination reaction of 1,1,2-trifluoroethane (HFC-143), a hydrogenation reaction of (E) and/or (Z)-1,2-dichloro-1,2-difluoroethylene (CFO-1112(E/Z)), or a dehydrochlorination reaction of 1-chloro-1,2-difluoroethane (HCFC-142a).

The total amount of the refrigerant in the composition can be determined by gas chromatography.

In one embodiment, the refrigerant contained in the composition is preferably substantially a combination composed of at least one refrigerant that undergoes disproportionation selected from the group consisting of HFO-1132(E/Z), HFO-1132a, HFO-1123, and FO-1114, and a refrigerant that does not undergo disproportionation.

In the composition according to the present disclosure, the refrigerant content is not limited, and is usually preferably 95 mass% or less, more preferably 90 mass% or less, even more preferably 80 mass% or less, particularly preferably 70 mass% or less, and most preferably 60 mass% or less, based on the entire composition. The refrigerant content is preferably 5 mass% or more, more preferably 10 mass% or more, even more preferably 20 mass% or more, particularly preferably 30 mass% or more, and most preferably 40 mass% or more, based on the entire composition.

As other refrigerants, impurities that can possibly be mixed during the production of the refrigerants (unavoidable impurities) may be contained.

For example, in terms of HFO-1132(E/Z), examples of the impurities include hydrogen fluoride, fluoroethylene, HFO-1123, 1,1,1-trifluoroethane, propylene, acetylene, HFC-32, trifluoromethane, fluoromethane, HFO-1123, HFC-152a, HFC-161, HFC-143, 2-chloro-1,1,1-trifluoroethane (HCFC-133b), 1-chloro-1,2-trifluoroethane (HCFC-133), 1,1-dichloro-2,2,2-trifluoroethane (HCFC-123), 1-chloro-1,2-difluoroethane (HCFC-142a), 1,2-difluoroethane (HFC-152), chlorodifluoromethane (HCFC-22), 1,1,1,2-tetrafluoroethane (HFC-134a), 1,1,2,2-tetrafluoroethane (HFC-134), HFC-125, HFO-1234yf, HFO-1225ye(E/Z), HFO-1234ze(E/Z), fluoroethylene (HFO-1141), 3,3,3-trifluoropropene (HFO-1243zf), HFO-1132a, 1-chloro-2,2-difluoroethylene (HCFO-1122), 1-chloro-1,2-difluoroethylene (HCFO-1122a), ethylene, and the like.

When the refrigerant in the composition according to the present disclosure contains impurities of the refrigerant, the content of the impurities is not limited and may be, for example, about 0.1 ppm or more and 10,000 ppm or less on a weight basis. Within this range, the stabilizing effect on the refrigerant in the composition is less likely to be interfered with.

The refrigerant contained in the composition is required to have a global warming potential (GWP) of less than 10, low toxicity, and non-flammability.

As the refrigerant, it is preferable to use an HFO-based refrigerant (e.g., HFO-1132(E), HFO-1132(Z), HFO-1132a, HFO-1123, or FO-1114) independently since they have a GWP of less than 10 and low toxicity; however, it is also not favorable to use these refrigerants since they have flammability and poor stability (for example, they have characteristics of undergoing disproportionation reaction). In terms of the unfavorable points, attempts have been made to solve the problem by mixing with other refrigerants in a refrigerant composition, and by controlling operating conditions of the equipment of an air-conditioning system and handling conditions, such as mixing and storing.

The disproportionation reaction of HFO-1132(E) and HFO-1132(Z) as HFO-based refrigerants is represented by the following formula:

$$CHF=CHF \rightarrow 2C+2HF.$$

A disproportionation reaction occurs when the following three factors are all present: 1. temperature, 2. pressure and refrigerant formulation, and 3. ignition energy.

1. Temperature

For example, a possible approach to suppress a disproportionation reaction is to release the pressure and control the temperature when the temperature of an air-conditioning system exceeds a predetermined temperature.

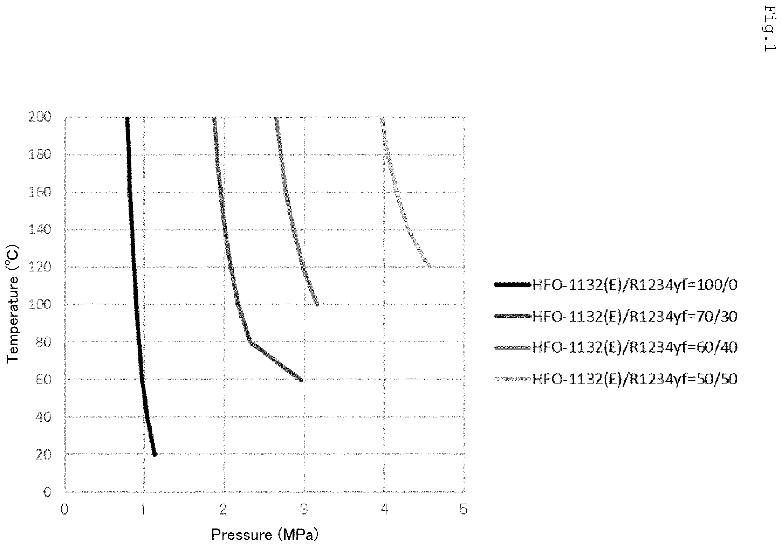

Fig. 1 is a graph showing the range in which disproportionation occurs in the air-conditioning system according to the present disclosure, for example, based on formulation ratios of a refrigerant that undergoes disproportionation, i.e., HFO-1132(E), and a refrigerant that does not undergo disproportionation, i.e., HFO-1234yf. Under temperature and pressure conditions that cause disproportionation, if an ignition source is present, disproportionation occurs. In each graph, the temperature and pressure conditions that cause disproportionation are on the positive side in the horizontal axis direction.

2. Pressure and Refrigerant Formulation

For example, a possible approach to suppress a disproportionation reaction is to stop energization and control the pressure when the pressure of the air-conditioning system reaches a predetermined pressure. Regarding the refrigerant formulation, for example, a possible approach to suppress a disproportionation reaction is to increase the percentage of the refrigerant that does not undergo disproportionation. For example, a possible approach to suppress a disproportionation reaction is to use a mixture containing HFC-32 as the refrigerant that does not undergo disproportionation.

3. Ignition Energy

There is no limitation.

Ignition Energy: conditions in which 30 J is assumed

Possible examples include layer short circuits in compressor wiring, melting and cutting with Joule heating, sparks, frictional heat generated from sliding parts, heat generated by motors, adiabatic compression of refrigerants in piping, collision energy between a refrigerant and a structure, and the like. The magnitude of ignition energy varies, and it is believed that the larger the energy amount, the more likely disproportionation is to occur.

Typically, ignition energy to be given in combustion evaluation for refrigerants is 20 J or more according to the High Pressure Gas Safety Law, and is 30 J in actual measurement.

As explained above, a disproportionation reaction occurs when the following three factors are all present: 1. temperature, 2. pressure and refrigerant formulation, and 3. ignition energy. Thus, it is possible to suppress a disproportionation reaction by adjusting or controlling the temperature, pressure, and/or refrigerant formulation at an ignition energy of 30 J such that the refrigerant in a composition comprising a specific refrigerant that undergoes disproportionation and a specific refrigerant that does not undergo disproportionation satisfies the range represented by the formula:

$$y < -1.5761x + 3.9516,$$

wherein x represents the common logarithm (log) of the concentration ($mol/m^3$) of the refrigerant that undergoes disproportionation in a gas phase of the composition, and
y represents the common logarithm (log) of thermal diffusivity ($mm^2/s$) of the entire refrigerant in the composition.

Ignition Energy: conditions in which 500 J is assumed

Typically, the ignition energy of frictional heat generated from sliding parts reaches 500 J.

When the ignition energy is 500 J, it is possible to suppress a disproportionation reaction by adjusting or controlling the temperature, pressure, and/or refrigerant formulation such that the refrigerant in a composition comprising a specific refrigerant that undergoes disproportionation and a specific refrigerant that does not undergo disproportionation satisfies the range represented by the formula:

$$y < -1.4941x + 3.6044,$$

wherein x represents the common logarithm (log) of the concentration ($mol/m^3$) of the refrigerant that undergoes disproportionation in a gas phase of the composition, and
y represents the common logarithm (log) of thermal diffusivity ($mm^2/s$) of the entire refrigerant in the composition.

The conditions that are capable of suppressing a disproportionation reaction of the refrigerant in the composition even when the ignition energy is set to 500 J

$$(formula: y < -1.4941x + 3.6044)$$

are more preferred than the conditions used when the ignition energy is set to 30 J

$$(formula: y < -1.5761x + 3.9516).$$

(2) Explanation of General Formula

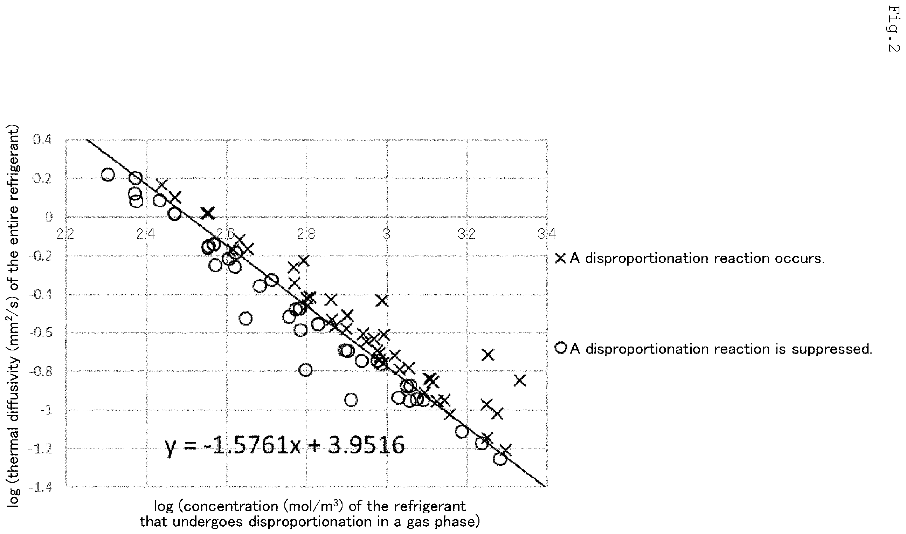

Fig. 2 is a graph showing refrigerant operating conditions when the composition according to the present disclosure comprising a refrigerant that undergoes disproportionation and a refrigerant that does not undergo disproportionation is used, for example, in an air-conditioning system, the graph being for use in obtaining general formulas representing the refrigerant formulation, temperature, and pressure conditions that do not cause a disproportionation reaction.

By obtaining general formulas representing the refrigerant formulation, temperature, and pressure conditions that do not cause a disproportionation reaction when the composition according to the present disclosure is used, for example, in an air-conditioning system, as shown in Fig. 2, the air-conditioning system can be operated while a disproportionation reaction is suppressed under conditions of a specific refrigerant formulation, specific temperature, and specific pressure.

For example, in an air-conditioning system, as shown in the graph of Fig. 2, in which the thermal diffusivity of the entire refrigerant and the concentration of the refrigerant that undergoes disproportionation are plotted, the compositions according to the present disclosure are separated, across the graph, into "o," in which disproportionation is suppressed, and, "×," in which disproportionation occurs, as shown at the lower left of the graph (o) and the upper right of the graph (×).

The lower left of the graph is the region occupied by "o." In this region, the refrigerant is controlled to be in the positions on the negative side in the y-axis direction relative to the graph (linear formula):

$$y = -1.5761x + 3.9516,$$

i.e., in the range represented by

$$y < -1.5761x + 3.9516.$$

The upper right of the graph is the region occupied by "x." In this region, the refrigerant is controlled to be in the positions on the positive side in the y-axis direction relative to the graph (linear formula):

$$y = -1.5761x + 3.9516,$$

i.e., in the range represented by

$$y > -1.5761x + 3.9516.$$

For example, in an air-conditioning system, as shown in Fig. 2, when the operation is performed under conditions of the refrigerant formulation, temperature, and pressure that allow the composition according to the present disclosure to be in the lower left region (o) relative to the boundary line of the graph (linear formula), i.e., when the refrigerant is controlled to be in the range represented by

$$y < -1.5761x + 3.9516,$$

the air-conditioning system can be operated while a disproportionation reaction is suppressed.

The above explanation is also applicable when the refrigerant is set to satisfy the range represented by the formula:

$$y < -1.4941x + 3.6044,$$

wherein x represents the common logarithm (log) of the concentration ($mol/m^3$) of the refrigerant that undergoes disproportionation in a gas phase of the composition according to the present disclosure, and

y represents the common logarithm (log) of thermal diffusivity ($mm^2/s$) of the entire refrigerant in the composition.

(2-1) Explanation of x-axis

x-axis: the log (the concentration of the refrigerant that undergoes disproportionation in a gas phase of the composition ($mol/m^3$))

The composition according to the present disclosure is used, for example, in an air-conditioning system, and x (x-axis) represents the common logarithm (log) of the concentration ($mol/m^3$) of the refrigerant that undergoes disproportionation in a gas phase of the composition.

In the composition according to the present disclosure, the range of the x-axis, i.e., the range of the log (the concentration (mol/m$^3$) of the refrigerant that undergoes disproportionation in a gas phase of the composition), is preferably -0.59 or more and 4.23 or less, and more preferably 2.2 or more and 3.4 or less, from the viewpoint of satisfactorily suppressing a disproportionation reaction when the composition is used, for example, in an air-conditioning system.

The phrase "the sum of the refrigerant that undergoes disproportionation" means the sum of the refrigerants that undergo disproportionation in the refrigerant formulation. When a single refrigerant that undergoes disproportionation is used alone, the phrase refers to this single refrigerant, and when a combination of two or more refrigerants that undergo disproportionation is used, the phrase refers to the sum of this combination of the two or more refrigerants that undergo disproportionation.

The concentration (mol/m$^3$) of the refrigerant that undergoes disproportionation in a gas phase of the composition represented by a common logarithm (log) as the x (x-axis) value depends on the temperature, pressure, and refrigerant formulation.

(2-2) Explanation of y-axis

y-axis: the log (the thermal diffusivity (mm$^2$/s) of the entire refrigerant in the composition)

The composition according to the present disclosure is used, for example, in an air-conditioning system, and y (y-axis) represents the common logarithm (log) of the thermal diffusivity (mm$^2$/s) of the entire refrigerant.

In the composition according to the present disclosure, the range of the y-axis, i.e., the range of the log (the thermal diffusivity (mm$^2$/s) of the entire refrigerant in the composition) is in accordance with the range of the x-axis, based on the formula.

The thermal diffusivity (mm$^2$/s) of the entire refrigerant represented by a common logarithm (log) as the y (y-axis) value is calculated according to the following formula.

```
Thermal diffusivity (mm²/s) of the entire refrigerant

= thermal conductivity [mW/(m K)]/(density [kg/(m³)] × specific

heat [kJ/kg K])
```

The thermal conductivity [mW/(m K)] depends on the refrigerant formulation, temperature, and pressure.

The density [kg/(m$^3$)] depends on the refrigerant formulation, temperature, and pressure.

The specific heat [kJ/kg K] depends on the refrigerant formulation, temperature, and pressure.

Specific heat means molar specific heat at constant pressure.

The thermal conductivity [mW/(m K)], density [kg/(m$^3$)], and specific heat [kJ/kg K] may be actually measured or may be calculated theoretically using the Reference Fluid Thermodynamic and Transport Properties Database (Refprop) of the National Institute of Science and Technology (NIST).

(2-3) Explanation of Relational Formula of x and y

$$y < -1.5761x + 3.9516$$

x = the log of the concentration (mol/m$^3$) of the refrigerant that undergoes disproportionation in a gas phase of the composition

y = the log of the thermal diffusivity (mm$^2$/s) of the entire refrigerant in the composition

When the composition according to the present disclosure is used, for example, in an air-conditioning system, and when the operation is performed under conditions in which the refrigerant is controlled to be within the range represented by the formula: y < -1.5761x + 3.9516, the air-conditioning system can be operated while a disproportionation reaction is suppressed, for example, at an ignition energy of 30 J.

The above explanation is also applicable, for example, at an ignition energy of 500 J when the refrigerant is set to satisfy the range represented by the formula:

$$y < -1.4941x + 3.6044,$$

wherein x represents the common logarithm (log) of the concentration (mol/m$^3$) of the refrigerant that undergoes disproportionation in a gas phase of the composition according to the present disclosure, and
y represents the common logarithm (log) of thermal diffusivity (mm$^2$/s) of the entire refrigerant in the composition.

When the composition according to the present disclosure is used, for example, in an air-conditioning system, the range of x is preferably -0.59 or more and 4.23 or less, and the range of y is in accordance with the range of x, based on the formula, from the viewpoint of suppressing a disproportionation reaction in an excellent manner.

The conditions under which a disproportionation reaction occurs at an ignition energy of 500 J include conditions under which a disproportionation reaction is suppressed at an ignition energy of 30 J. The conditions under which a disproportionation reaction occurs at an ignition energy of 500 J are conditions within an allowable range in which a disproportionation reaction is suppressed.

The conditions under which a disproportionation reaction is suppressed at an ignition energy of 500 J are safer and more preferable than the conditions under which a disproportionation reaction is suppressed at an ignition energy of 30 J, from the view point of suppressing disproportionation even under further severe conditions during equipment failure or in emergency situations.

(3) Explanation of Refrigerant

The phrase "entire refrigerant" refers to the sum of the refrigerant that undergoes disproportionation and the refrigerant that does not undergo disproportionation in the refrigerant formulation.

The refrigerant that undergoes disproportionation comprises at least one component selected from the group consisting of HFO-1132(E/Z), HFO-1132a, HFO-1123, and FO-1114, which may be used alone or in a combination of two or more.

The refrigerant that does not undergo disproportionation preferably comprises at least one component selected from the group consisting of HFO-1243zf, $CF_3I$, HFC-32, HFO-1234yf, HFO-1234ze(E), FO-1216, PFC-14, HFC-125, HFC-134, HFC-134a, HFC-143a, HFC-152a, HFC-161, HFC-227ea, HFO-1225ye(Z), HFO-1225ye(E), $CF_3SCF_3$, propane, cyclopropane, propylene, isobutene, isobutane, carbon dioxide, and ammonia, which may be used alone or in a combination of two or more.

Due to the above features, the composition according to the present disclosure, when used, for example, in an air-conditioning system, can provide an air-conditioning system comprising a refrigerant in which a disproportionation reaction of the refrigerant is suppressed.

[2] Examples of Specific Use of Composition

(1) Specific Case 1

For the refrigerant formulation, based on the entire refrigerant in a composition, 60 mass% of HFO-1132 (E/Z) is present as a refrigerant that undergoes disproportionation, and 40 mass% of HFO-1234yf is present as a refrigerant that does not undergo disproportionation.

The temperature condition is set to be 150°C.

The pressure condition is set to be 3.00 MPa.

Whether a disproportionation reaction occurs is verified under the refrigerant formulation, temperature, and pressure conditions described above.

(1-1): Calculation of the right side -1.5761x + 3.9516 of the formula: y = -1.5761x + 3.9516

The concentration (mol/m$^3$) of the refrigerant that undergoes disproportionation in a gas phase of the composition is calculated as a common logarithm (log) on the x-axis.

The density of the entire refrigerant (HFO-1132(E/Z)+HFO-1234yf = 60+40) is 76.912 [kg/m$^3$] at 150°C and 3.00 MPa.

The concentration of the refrigerant that undergoes disproportionation (HFO-1132(E/Z), Mw: 64.035) is 76.912 [kg/m$^3$]$\times$0.6/64.035 [g/mol] = 720.66 [mol/m$^3$].

On the x-axis, the log (the concentration (mol/m$^3$) of the refrigerant that undergoes disproportionation in a gas phase of the composition)

= log (720.66)
= 2.8577.

In the relational formula of x and y:
for y = -1.5761x + 3.9516, if 2.857 is substituted for x, y is -0.55242.
Next, separately, the log of the thermal diffusivity ($mm^2/s$) of the entire refrigerant in the composition is calculated, and when the calculated value is lower than the y value -0.55242 above, that is, when it is positioned, across the graph of the relational formula of x and y, lower left relative to the boundary line of the graph (Fig. 2), the air-conditioning system can be operated using the composition in which a disproportionation reaction is suppressed by performing the operation under the refrigerant formulation, temperature, and pressure conditions described above. The lower left of the graph is located on the negative side in the y-axis direction relative to the graph (linear formula).
However, the log of the thermal diffusivity ($mm^2/s$) of the entire refrigerant in the composition is calculated, and when the calculated value is higher than the y value -0.55242 above, that is, when it is positioned, across the graph of the relational formula of x and y, upper right relative to the boundary line of the graph (Fig. 2), the air-conditioning system is operated using the composition in which a disproportionation reaction occurs by performing the operation under the refrigerant formulation, temperature, and pressure conditions described above. The upper right of the graph is located on the positive side in the y-axis direction relative to the graph (linear formula).
Specifically, an air-conditioning system in which a disproportionation reaction is suppressed can be operated by controlling the refrigerant to satisfy the range represented by

$$y < -1.5761x + 3.9516.$$

(1-2): Calculation of the left side y of the formula: y = -1.5761x + 3.9516

The thermal diffusivity ($mm^2/s$) of the entire refrigerant in the composition is calculated as a common logarithm (log) on the y-axis.
The thermal conductivity of the entire refrigerant (HFO-1132(E/Z)+HFO-1234yf = 60+40) is 28.000 [mW/(m K)] at 150°C and 3.00 MPa.
The density of the entire refrigerant (HFO-1132(E/Z)+HFO-1234yf = 60+40) is 76.912 [$kg/m^3$] at 150°C and 3.00 MPa.
The specific heat of the entire refrigerant (HFO-1132(E/Z)+HFO-1234yf = 60+40) is 1.2482 [kJ/kg K] at 150°C and 3.00 MPa.
The thermal diffusivity of the entire refrigerant (HFO-1132(E/Z)+HFO-1234yf = 60+40) is calculated as 28.000 [mW/(m K)]/(76.912 [$kg/m^3$] $\times$ 1.2482 [kJ/kg K]) = 0.29167 [$mm^2/s$] at 150°C and 3.00 MPa.
On the y-axis, the log (the thermal diffusivity ($mm^2/s$) of the entire refrigerant in the composition)

= log (0.29167)
= -0.53511.

The value -0.53511 of y, i.e., the log (the thermal diffusivity ($mm^2/s$) of the entire refrigerant in the composition), is higher than the value -0.55242 of -1.5761x + 3.9516 (x: the log (the concentration ($mol/m^3$) of the refrigerant that undergoes disproportionation in a gas phase of the composition)); that is, it is positioned, across the graph of the relational formula of x and y, upper right relative to the boundary line of the graph; that is, it is located on the positive side in the y-axis direction relative to the graph (linear formula) (Fig. 2).

(1-3) Explanation of Specific Case 1

When the refrigerant formulation is adjusted, for example, such that based on the entire refrigerant in an air-conditioning system, 60 mass% of HFO-1132 (E/Z) is present as a refrigerant that undergoes disproportionation, and 40 mass% of HFO-1234yf is present as a refrigerant that does not undergo disproportionation, when the temperature condition is set to be 150°C, and when the pressure condition is set to be 3.00 MPa, the composition comprises a refrigerant in which a disproportionation reaction occurs.

(2) Specific Case 2

For the refrigerant formulation, based on the entire refrigerant in a composition, 60 mass% of HFO-1132 (E/Z) is present as a refrigerant that undergoes disproportionation, and 40 mass% of HFO-1234yf is present as a refrigerant that does not undergo disproportionation.

The temperature condition is set to be 150°C.

The pressure condition is set to be 2.00 MPa.

Whether a disproportionation reaction occurs is verified under the refrigerant formulation, temperature, and pressure conditions described above.

(2-1): Calculation of the right side -1.5761x + 3.9516 of the formula: y = -1.5761x + 3.9516

The concentration (mol/m$^3$) of the refrigerant that undergoes disproportionation in a gas phase of the composition is calculated as a common logarithm (log) on the x-axis.

The density of the entire refrigerant (HFO-1132(E/Z)+HFO-1234yf = 60+40) is 52.060 [kg/m$^3$] at 130°C and 2.00 MPa.

The concentration of the refrigerant that undergoes disproportionation (HFO-1132(E/Z), Mw: 64.035) is 48.657 [kg/m$^3$]$\times$0.6/64.035 [g/mol] = 455.91 [mol/m$^3$].

On the x-axis, the log (the concentration (mol/m$^3$) of the refrigerant that undergoes disproportionation in a gas phase of the composition)

= log (455.91)
= 2.6589.

In the relational formula of x and y:

for y = -1.5761x + 3.9516, if 2.6589 is substituted for x, y is - 0.23909.

Next, separately, the log (the thermal diffusivity (mm$^2$/s) of the entire refrigerant in the composition) is calculated, and when the calculated value is lower than the y value -0.23909 above, that is, when it is positioned, across the graph of the relational formula of x and y, lower left relative to the boundary line of the graph (Fig. 2), the air-conditioning system can be operated using the composition in which a disproportionation reaction is suppressed by performing the operation under the refrigerant formulation, temperature, and pressure conditions described above. The lower left of the graph is located on the negative side in the y-axis direction relative to the graph (linear formula).

However, the log (the thermal diffusivity (mm$^2$/s) of the entire refrigerant in the composition) is calculated, and when the calculated value is higher than the y value -0.23909 above, that is, when it is positioned, across the graph of the relational formula of x and y, upper right relative to the boundary line of the graph (Fig. 2), the air-conditioning system is operated using the composition in which a disproportionation reaction occurs by performing the operation under the refrigerant formulation, temperature, and pressure conditions described above. The upper right of the graph is located on the positive side in the y-axis direction relative to the graph (linear formula).

Specifically, an air-conditioning system in which a disproportionation reaction is suppressed can be operated by controlling the refrigerant to satisfy the range represented by

$$y < -1.5761x + 3.9516.$$

(2-2): Calculation of the left side y of the formula: y = -1.5761x + 3.9516

The thermal diffusivity (mm$^2$/s) of the entire refrigerant in the composition is calculated as a common logarithm (log) on the y-axis.

The thermal conductivity of the entire refrigerant (HFO-1132(E/Z)+HFO-1234yf = 60+40) is 27.265 [mW/(m K)] at 150°C and 2.00 MPa.

The density of the entire refrigerant (HFO-1132(E/Z)+HFO-1234yf = 60+40) is 48.657 [kg/m$^3$] at 150°C and 2.00 MPa.

The specific heat of the entire refrigerant (HFO-1132(E/Z)+HFO-1234yf = 60+40) is 1.1962 [kJ/kg K] at 150°C and 2.00 MPa.

The thermal diffusivity of the entire refrigerant (HFO-1132(E/Z)+HFO-1234yf = 60+40) is calculated as 27.265 [mW/(m K)]/(48.657 [kg/m$^3$] $\times$ 1.1962 [kJ/kg K]) = 0.46844 [mm$^2$/s] at 150°C and 2.00 MPa.

On the y-axis, the log (the thermal diffusivity (mm$^2$/s) of the entire refrigerant in the composition)

= log (0.46844)
= -0.32935.

The value -0.32935 of y, i.e., the log (the thermal diffusivity (mm$^2$/s) of the entire refrigerant in the composition), is lower than the value -0.23909 of -1.5761x + 3.9516 (x: the log (the concentration (mol/m$^3$) of the refrigerant that undergoes disproportionation in a gas phase of the composition); that is, it is positioned, across the graph of the relational formula of x and y, lower left relative to the boundary line of the graph; that is, it is located on the negative side in the y-axis direction relative to the graph (linear formula) (Fig. 2).

(2-3) Explanation of Specific Case 2

When the refrigerant formulation is adjusted, for example, such that based on the entire refrigerant in an air-conditioning system, 60 mass% of HFO-1132 (E/Z) is present as a refrigerant that undergoes disproportionation, and 40 mass% of HFO-1234yf is present as a refrigerant that does not undergo disproportionation, when the temperature condition is set to be 130°C, and when the pressure condition is set to be 2.00 MPa, the composition comprises a refrigerant in which a disproportionation reaction is suppressed (does not occur).

(3) Specific Case 3

For the refrigerant formulation, based on the entire refrigerant in a composition, 50 mass% of HFO-1132 (E/Z) is present as a refrigerant that undergoes disproportionation, and 50 mass% of HFO-1234yf is present as a refrigerant that does not undergo disproportionation.
The temperature condition is set to be 150°C.
The pressure condition is set to be 5.00 MPa.
Whether a disproportionation reaction occurs is verified under the refrigerant formulation, temperature, and pressure conditions described above.

(3-1): Calculation of the right side -1.5761x + 3.9516 of the formula: y = -1.5761x + 3.9516

The concentration (mol/m$^3$) of the refrigerant that undergoes disproportionation in a gas phase of the composition is calculated as a common logarithm (log) on the x-axis.
The density of the entire refrigerant (HFO-1132(E/Z)+HFO-1234yf = 50+50) is 153.33 [kg/m$^3$] at 150°C and 5.00 MPa.
The concentration of the refrigerant that undergoes disproportionation (HFO-1132(E/Z), Mw: 64.035) is 153.33 [kg/m$^3$]×0.5/64.035[g/mol] = 1197.2 [mol/m$^3$].
On the x-axis, the log (the concentration (mol/m$^3$) of the refrigerant that undergoes disproportionation in a gas phase of the composition)

= log (1197.2)
= 3.0782.

In the relational formula of x and y:
for y = -1.5761x + 3.9516, if 3.0782 is substituted for x, y is - 0.89995.
Next, separately, the log (the thermal diffusivity (mm$^2$/s) of the entire refrigerant in the composition) is calculated, and when the calculated value is lower than the y value -0.89995 above, that is, when it is positioned, across the graph of the relational formula of x and y, lower left relative to the boundary line of the graph (Fig. 2), the air-conditioning system can be operated using the composition in which a disproportionation reaction is suppressed by performing the operation under the refrigerant formulation, temperature, and pressure conditions described above. The lower left of the graph is located on the negative side in the y-axis direction relative to the graph (linear formula).
However, the log (the thermal diffusivity (mm$^2$/s) of the entire refrigerant in the composition) is calculated, and when the calculated value is higher than the y value -0.89995 above, that is, when it is positioned, across the graph of the relational formula of x and y, upper right relative to the boundary line of the graph (Fig. 2), the air-conditioning system is operated using the composition in which a disproportionation reaction occurs by performing the operation under the refrigerant formulation, temperature, and pressure conditions described above. The upper right of the graph is located on the positive side in the y-axis direction relative to the graph (linear formula).
Specifically, an air-conditioning system in which a disproportionation reaction is suppressed can be operated by controlling the refrigerant to satisfy the range represented by:

$$y < -1.5761x + 3.9516.$$

(3-2): Calculation of the left side y of the formula: y = -1.5761x + 3.9516

The thermal diffusivity (mm$^2$/s) of the entire refrigerant in the composition is calculated as a common logarithm (log) on the y-axis.

The thermal conductivity of the entire refrigerant (HFO-1132(E/Z)+HFO-1234yf = 50+50) is 30.660 [mW/(m K)] at 150°C and 5.00 MPa.

The density of the entire refrigerant (HFO-1132(E/Z)+HFO-1234yf = 50+50) is 153.33 [kg/m$^3$] at 150°C and 5.00 MPa.

The specific heat of the entire refrigerant (HFO-1132(E/Z)+HFO-1234yf = 60+40) is 1.4033 [kJ/kg K] at 150°C and 5.00 MPa.

The thermal diffusivity of the entire refrigerant (HFO-1132(E/Z)+HFO-1234yf = 50+50) is calculated as 30.660 [mW/(m K)]/(153.33 [kg/m$^3$] × 1.4033 [kJ/kg K]) =0.14249 [mm$^2$/s] at 150°C and 5.00MPa.

On the y-axis, the log (the thermal diffusivity (mm$^2$/s) of the entire refrigerant in the composition)

= log (0.14249)
= -0.84622.

The value -0.84622 of y, i.e., the log (the thermal diffusivity (mm$^2$/s) of the entire refrigerant in the composition), is higher than the value -0.89995 of -1.5761x + 3.9516 (x: the log (the concentration (mol/m$^3$) of the refrigerant that undergoes disproportionation in a gas phase of the composition)); that is, it is positioned, across the graph of the relational formula of x and y, upper right relative to the boundary line of the graph; that is, it is located on the positive side in the y-axis direction relative to the graph (linear formula) (Fig. 2).

(3-3) Explanation of Specific Case 3

When the refrigerant formulation is adjusted, for example, such that based on the entire refrigerant in an air-conditioning system, 50 mass% of HFO-1132 (E/Z) is present as a refrigerant that undergoes disproportionation, and 50 mass% of HFO-1234yf is present as a refrigerant that does not undergo disproportionation, when the temperature condition is set to be 150°C, and when the pressure condition is set to be 5.00 MPa, the composition comprises a refrigerant that undergoes a disproportionation reaction.

(4) Specific Case 4

For the refrigerant formulation, based on the entire refrigerant in a composition, 50 mass% of HFO-1132 (E/Z) is present as a refrigerant that undergoes disproportionation, and 50 mass% of HFO-1234yf is present as a refrigerant that does not undergo disproportionation.

The temperature condition is set to be 150°C.

The pressure condition is set to be 4.00 MPa.

Whether a disproportionation reaction occurs is verified under the refrigerant formulation, temperature, and pressure conditions described above.

(4-1): Calculation of the right side -1.5761x + 3.9516 of the formula: y = -1.5761x + 3.9516

The concentration (mol/m$^3$) of the refrigerant that undergoes disproportionation in a gas phase of the composition is calculated as a common logarithm (log) on the x-axis.

The density of the entire refrigerant (HFO-1132(E/Z)+HFO-1234yf = 50+50) is 115.46 [kg/m$^3$] at 150°C and 4.00 MPa.

The concentration of the refrigerant that undergoes disproportionation (HFO-1132(E/Z), Mw: 64.035) is 115.46 [kg/m$^3$]×0.5/64.035 [g/mol] = 901.54 [mol/m$^3$].

On the x-axis, the log (the concentration (mol/m$^3$) of the refrigerant that undergoes disproportionation in a gas phase of the composition)

= log (901.54)
= 2.9550.

In the relational formula of x and y:
for y = -1.5761x + 3.9516, if 2.9550 is substituted for x, y is - 0.70578.

Next, separately, the log (the thermal diffusivity (mm$^2$/s) of the entire refrigerant in the composition) is calculated, and when the calculated value is lower than the y value -0.70578 above, that is, when it is positioned, across the graph of the relational formula of x and y, lower left relative to the boundary line of the graph (Fig. 2), the air-conditioning system can be operated using the composition in which a disproportionation reaction is suppressed by performing the operation under the refrigerant formulation, temperature, and pressure conditions described above. The lower left of the graph is located on the negative side in the y-axis direction relative to the graph (linear formula).

However, the log (the thermal diffusivity ($mm^2/s$) of the entire refrigerant in the composition) is calculated, and when the calculated value is higher than the y value -0.70578 above, that is, when it is positioned, across the graph of the relational formula of x and y, upper right relative to the boundary line of the graph (Fig. 2), the air-conditioning system is operated using the composition in which a disproportionation reaction occurs by performing the operation under the refrigerant formulation, temperature, and pressure conditions described above. The upper right of the graph is located on the positive side in the y-axis direction relative to the graph (linear formula).

Specifically, an air-conditioning system in which a disproportionation reaction is suppressed can be operated by controlling the refrigerant to satisfy the range represented by:

$$y < -1.5761x + 3.9516.$$

(4-2): Calculation of the left side y of the formula: y = -1.5761x + 3.9516

The thermal diffusivity ($mm^2/s$) of the entire refrigerant in the composition is calculated as a common logarithm (log) on the y-axis.

The thermal conductivity of the entire refrigerant (HFO-1132(E/Z)+HFO-1234yf = 50+50) is 28.922 [mW/(m K)] at 150°C and 4.00 MPa.

The density of the entire refrigerant (HFO-1132(E/Z)+HFO-1234yf = 50+50) is 115.46 [$kg/m^3$] at 150°C and 4.00 MPa.

The specific heat of the entire refrigerant (HFO-1132(E/Z)+HFO-1234yf = 50+50) is 1.3162 [kJ/kg K] at 150°C and 4.00 MPa.

The thermal diffusivity of the entire refrigerant (HFO-1132(E/Z)+HFO-1234yf = 50+50) is calculated as 28.922 [mW/(m K)]/(115.46 [$kg/m^3$] $\times$ 1.3162 [kJ/kg K]) = 0.19031 [$mm^2/s$] at 150°C and 4.00 MPa.

On the y-axis, the log (the thermal diffusivity ($mm^2/s$) of the entire refrigerant in the composition)

= log (0.19031)
= -0.72054.

The value -0.72054 of y, i.e., the log (the thermal diffusivity ($mm^2/s$) of the entire refrigerant in the composition), is lower than the value -0.70578 of -1.5761x + 3.9516 (x: the log (the concentration ($mol/m^3$) of the refrigerant that undergoes disproportionation in a gas phase of the composition); that is, it is positioned, across the graph of the relational formula of x and y, lower left relative to the boundary line of the graph; that is, it is located on the negative side in the y-axis direction relative to the graph (linear formula) (Fig. 2).

(4-3) Explanation of Specific Case 4

When the refrigerant formulation is adjusted, for example, such that based on the entire refrigerant in an air-conditioning system, 50 mass% of HFO-1132 (E/Z) is present as a refrigerant that undergoes disproportionation, and 50 mass% of HFO-1234yf is present as a refrigerant that does not undergo disproportionation, when the temperature condition is set to be 150°C, and when the pressure condition is set to be 4.00 MPa, the operation is performed using a composition comprising a refrigerant in which a disproportionation reaction is suppressed (does not occur).

(5) Application of specific use examples of the composition

When the composition according to the present disclosure is used, for example, in an air-conditioning system, and, as explained in specific cases 1 to 4 above, if the air-conditioning system is operated, for example, at an ignition energy of 30 J under conditions such that the refrigerant is controlled to be in the range represented by the formula:

$$y < -1.5761x + 3.9516,$$

wherein

x = log (concentration (mol/m$^3$) of a refrigerant that undergoes disproportionation in a gas phase of the composition), and

y = log (thermal diffusivity (mm$^2$/s) of the entire refrigerant in the composition),

the air-conditioning system can be operated while a disproportionation reaction is suppressed.

The above explanation is also applicable to the case in which for example, at an ignition energy of 500J, the refrigerant is set to satisfy the range represented by the formula:

$$y < -1.4941x + 3.6044.$$

When the air-conditioning system is operated under conditions such that the refrigerant is controlled to be in this range, the air-conditioning system can be operated while a disproportionation reaction is suppressed.

In view of satisfactory suppression of the disproportionation reaction achieved when the composition according to the present disclosure is applied to, for example, an air-conditioning system, x is preferably in the range of -0.59 or more and 4.23 or less, and more preferably in the range of 2.2 or more and 3.4 or less. The range of y is determined according to the range of x based on the above formula.

The conditions in which a disproportionate reaction occurs at an ignition energy of 500 J include conditions under which a disproportionate reaction is suppressed at an ignition energy of 30 J. The conditions under which the disproportionate reaction occurs at an ignition energy of 500 J are conditions in an allowable range in which a disproportionate reaction is suppressed. The conditions under which the disproportionation reaction is suppressed at an ignition energy of 500 J can be considered to be more preferable conditions than those under which the disproportionation reaction is suppressed at an ignition energy of 30 J.

[3] Refrigerant oil

The composition according to the present disclosure preferably further contains refrigeration oil and is used as a working fluid in a refrigerating machine (working fluid for refrigerating machines) or as a refrigeration oil-containing working fluid.

Specifically, the composition according to the present disclosure can be obtained as a refrigeration oil-containing working fluid by mixing the refrigerant with refrigeration oil used in a compressor of a refrigerating machine.

The composition according to the present disclosure, which contains refrigeration oil, changes its formulation during the refrigeration cycle. Specifically, the composition according to the present disclosure has a relatively high refrigeration oil content in the compressor and a relatively low refrigeration oil content during the period when the composition is discharged from the compressor in the form of a mist to returning to the compressor. For example, the refrigeration oil content of the composition according to the present disclosure in the compressor is 30 mass% to 70 mass%, whereas its content during the period when the composition is discharged from the compressor and returns to the compressor is preferably 0 to 20 mass%, and more preferably 1 mass ppm to 10 mass%.

The refrigeration oil is mainly a base oil and is a lubricant.

The refrigeration oil preferably contains at least one polymer selected from the group consisting of polyalkylene glycol (PAG), polyol ester (POE), polyvinyl ether (PVE), silicone oil, and fluorine-containing oil.

Examples of polyalkylene glycol (PAG) include SUNICE P56, produced by Japan Sun Oil Company, Ltd. Examples of polyol ester (POE) include Ze-GLES RB32, produced by JX Nippon Oil & Energy Corporation.

The refrigeration oil preferably further contains at least one additive in addition to the base oil. The additive is preferably at least one component selected from the group consisting of compatibilizing agents, ultraviolet fluorescent dyes, stabilizers, polymerization inhibitors, antioxidants, extreme-pressure agents, acid scavengers, oxygen scavengers, copper deactivators, anticorrosive agents, oily agents, and antifoaming agents.

In terms of lubrication, the refrigeration oil preferably has a kinematic viscosity of 5 cSt to 400 cSt at 40°C.

The refrigeration oil preferably further comprises at least one additive in addition to the base oil. The additive is preferably at least one member selected from the group consisting of compatibilizing agents, antioxidants, extreme-pressure agents, acid scavengers, oxygen scavengers, copper deactivators, anticorrosive agents, oily agents, and antifoaming agents.

The compatibilizing agent that can be used is not limited and can be selected from commonly used compatibilizing agents. Preferable examples of compatibilizing agents include polyoxyalkylene glycol ethers, amides, nitriles, ketones, chlorocarbons, esters, lactones, aryl ethers, fluoroethers, and 1,1,1-trifluoroalkane. Of these, polyoxyalkylene glycol ethers are more preferred. The refrigeration oil may contain a single compatibilizing agent, or two or more compatibilizing agents.

The refrigeration oil-containing working fluid preferably contains a trace of moisture because the moisture contained stabilizes double bonds in the molecules of unsaturated fluorocarbon-based compounds that can be present in the refrigerant. Further, since the presence of a trace of moisture in the refrigeration oil-containing working fluid makes the oxidation of unsaturated fluorocarbon-based compounds less likely to occur, the stability of the refrigerant increases.

A tracer that can be used is added to the refrigerant at a detectable concentration such that when the refrigeration oil-containing working fluid has been diluted or contaminated or undergone other changes, the tracer can trace the changes. The refrigeration oil may contain a single tracer, or two or more tracers.

The ultraviolet fluorescent dye that can be used is not limited, and can be suitably selected from commonly used ultraviolet fluorescent dyes. Preferable examples of ultraviolet fluorescent dyes include naphthalimide, coumarin, anthracene, phenanthrene, xanthene, thioxanthene, naphthoxanthene, fluorescein, and derivatives of these dyes. Of these, naphthalimide and coumarin are more preferred. The refrigeration oil may contain a single ultraviolet fluorescent dye, or two or more ultraviolet fluorescent dyes.

The stabilizer that can be used is not limited, and can be suitably selected from commonly used stabilizers. Preferable examples of stabilizers include nitro compounds, ethers, amines, butyl hydroxyxylene, and benzotriazole.

Preferable examples of nitro compounds include aliphatic nitro compounds, such as nitromethane and nitroethane; and aromatic nitro compounds, such as nitro benzene and nitro styrene. Preferable examples of ethers include 1,4-dioxane. Preferable examples of amines include 2,2,3,3,3-pentafluoropropylamine and diphenylamine. The refrigeration oil may contain a single stabilizer, or two or more stabilizers.

The polymerization inhibitor that can be used is not limited, and can be suitably selected from commonly used polymerization inhibitors. Preferable examples of polymerization inhibitors include 4-methoxy-1-naphthol, hydroquinone, hydroquinone methyl ether, dimethyl-t-butylphenol, 2,6-di-tert-butyl-p-cresol, and benzotriazole. The refrigeration oil may contain a single polymerization inhibitor, or two or more polymerization inhibitors.

[4] Air-conditioning system operation method

The composition according to the present disclosure is preferably used in the operation of an air-conditioning system.

The composition according to the present disclosure is preferably used in a refrigeration method comprising operating a refrigeration cycle.

The composition according to the present disclosure is preferably used in a method for operating a refrigeration apparatus that operates a refrigeration cycle. Preferable examples of the refrigeration apparatus include air-conditioning systems, refrigerators, freezers, water coolers, ice makers, refrigerated showcases, freezing showcases, freezing and refrigerating units, refrigerating machines for freezing and refrigerating warehouses, air-conditioning systems for vehicles, turbo refrigerating machines, and screw refrigerating machines.

[5] Method for storing a composition comprising refrigerant

In the method for storing a composition comprising a refrigerant according to the present disclosure,

the refrigerant comprises a refrigerant that undergoes disproportionation and a refrigerant that does not undergo disproportionation;
the refrigerant that undergoes disproportionation comprises at least one component selected from the group consisting of HFO-1132(E/Z), HFO-1132a, HFO-1123, and FO-1114; and
the method comprises setting the refrigerant to satisfy the range represented by the formula:

$$y < -1.5761x + 3.9516,$$

wherein x represents a common logarithm (log) of a concentration ($mol/m^3$) of the refrigerant that undergoes disproportionation in a gas phase of the composition, and
y represents a common logarithm (log) of thermal diffusivity ($mm^2/s$) of the entire refrigerant in the composition.

In the method for storing a composition comprising a refrigerant according to the present disclosure,

the refrigerant comprises a refrigerant that undergoes disproportionation and a refrigerant that does not undergo disproportionation;
the refrigerant that undergoes disproportionation comprises at least one component selected from the group consisting of HFO-1132(E/Z), HFO-1132a, HFO-1123, and FO-1114; and
the method comprises setting the refrigerant to satisfy the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

In the method for storing a composition comprising a refrigerant according to the present disclosure, the refrigerant that does not undergo disproportionation is preferably at least one component selected from the group consisting of HFO-1243zf, CF$_3$I, HFC-32, HFO-1234yf, HFO-1234ze(E), FO-1216, PFC-14, HFC-125, HFC-134, HFC-134a, HFC-143a, HFC-152a, HFC-161, HFC-227ea, HFO-1225ye(E/Z), CF$_3$SCF$_3$, propane, cyclopropane, propylene, isobutene, isobutane, carbon dioxide, and ammonia.
The method for storing a composition containing the refrigerant according to the present disclosure preferably further comprises incorporating refrigeration oil.
The components, such as refrigerants and refrigeration oil, used in the method for storing a composition comprising the refrigerant according to the present disclosure, can be, for example, components described above in the section on the composition.

[6] Method for mixing refrigerants

The method for mixing refrigerants according to the present disclosure comprises mixing a refrigerant that undergoes disproportionation and a refrigerant that does not undergo disproportionation as the refrigerants, wherein

the refrigerant that undergoes disproportionation comprises at least one component selected from the group consisting of HFO-1132(E/Z), HFO-1132a, HFO-1123, and FO-1114, and
the refrigerant is set to satisfy the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

The method for mixing refrigerants according to the present disclosure comprises mixing a refrigerant that undergoes disproportionation and a refrigerant that does not undergo disproportionation as the refrigerants, wherein

the refrigerant that undergoes disproportionation comprises at least one component selected from the group consisting of HFO-1132(E/Z), HFO-1132a, HFO-1123, and FO-1114, and
the refrigerant is set to satisfy the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

In the method for mixing the composition containing refrigerants according to the present disclosure, the refrigerant that does not undergo disproportionation is preferably at least one component selected from the group consisting of HFO-1243zf, CF$_3$I, HFC-32, HFO-1234yf, HFO-1234ze (E), FO-1216, PFC-14, HFC-125, HFC-134, HFC-134a, HFC-143a, HFC-152a, HFC-161, HFC-227ea, HFO-1225ye(E/Z), CF$_3$SCF$_3$, propane, cyclopropane, propylene, isobutene, isobutane, carbon dioxide, and ammonia.
The method for mixing the composition containing refrigerants according to the present disclosure preferably further comprises incorporating refrigeration oil.
The components used in the method for mixing refrigerants according to the present disclosure, such as refrigerants and refrigeration oil, can be, for example, components described above in the section on the composition.

(7) Method for suppressing a disproportionation reaction

The method for suppressing a disproportionation reaction of the refrigerant according to the present disclosure comprises mixing a refrigerant that undergoes disproportionation and a refrigerant that does not undergo disproportionation as the refrigerant,
wherein

the refrigerant that undergoes disproportionation comprises at least one component selected from the group consisting of HFO-1132(E/Z), HFO-1132a, HFO-1123, and FO-1114, and
the refrigerant is set to satisfy the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

The method for suppressing a disproportionation reaction of a refrigerant according to the present disclosure comprises mixing a refrigerant that undergoes disproportionation and a refrigerant that does not undergo disproportionation as the refrigerant,

wherein the refrigerant that undergoes disproportionation comprises at least one component selected from the group consisting of HFO-1132(E/Z), HFO-1132a, HFO-1123, and FO-1114, and
the refrigerant is set to satisfy the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

Disproportionation is a chemical reaction in which two or more chemical species of the same type (individual components of ethylene fluorinated hydrocarbons with double bonds, such as HFO-1132(E)) react with each other to give two or more different types of products.
Based on having the structural feature described above, the method for suppressing a disproportionation reaction according to the present disclosure has the feature of suppressing a disproportionation reaction of at least one refrigerant selected from the group consisting of HFO-1132(E/Z), HFO-1132a, HFO-1123, and FO-1114.
The method for suppressing a disproportionation reaction according to the present disclosure comprises mixing at least one refrigerant selected from the group consisting of HFO-1132(E/Z), HFO-1132a, HFO-1123, and FO-1114 (or a composition comprising at least one of these refrigerants), and a refrigerant that does not undergo disproportionation under conditions such that the refrigerant satisfies the range represented by the formula:

$$y < -1.5761x + 3.9516$$

or the range represented by the formula:

$$y < -1.4941x + 3.6044,$$

wherein x represents a common logarithm (log) of a concentration (mol/m$^3$) of the refrigerant that undergoes disproportionation in a gas phase of the composition, and y represents a common logarithm (log) of thermal diffusivity (mm$^2$/s) of the entire refrigerant in the composition.
In the method for suppressing a disproportionation reaction of a refrigerant according to the present disclosure, the refrigerant that does not undergo disproportionation is preferably at least one component selected from the group consisting of HFO-1243zf, CF$_3$I, HFC-32, HFO-1234yf, HFO-1234ze(E), FO-1216, PFC-14, HFC-125, HFC-134, HFC-134a, HFC-143a, HFC-152a, HFC-161, HFC-227ea, HFO-1225ye(E/Z), CF$_3$SCF$_3$, propane, cyclopropane, propylene, isobutene, isobutane, carbon dioxide, and ammonia.

The method for suppressing a disproportionation reaction of a refrigerant according to the present disclosure further comprises incorporating refrigeration oil.

The components, such as refrigerants and refrigeration oil, used in the method for suppressing a disproportionation reaction of a refrigerant according to the present disclosure, can be, for example, components described above in the section on the composition.

Examples

The present disclosure is described in more detail below with reference to Examples. However, the present disclosure is not limited to the Examples.

Air-conditioning system operation method

In an air-conditioning system comprising a refrigerant, the refrigerant formulation of the refrigerant was set to a mixed refrigerant containing a refrigerant that undergoes disproportionation and a refrigerant that does not undergo disproportionation, and the temperature and pressure conditions of the refrigerant were adjusted.

(1) Examples of refrigerants that undergo disproportionation

HFO-1132(E): trans-1,2-difluoroethylene
HFO-1123: trifluoroethylene
HFO-1132a: 1,1-difluoroethylene

(2) Examples of refrigerants that do not undergo disproportionation

HFO-1234yf: 2,3,3,3-tetrafluoropropene
HFC-32: difluoromethane
HFO-1243zf: 3,3,3-trifluoropropene
R13I1: trifluoroiodomethane (CF$_3$I)
PFC-14: perfluoromethane
R290: propane.

(3) Temperature and pressure conditions

Temperature: 25°C to 180°C
Pressure: 0.60 MPa to 5.34 MPa

The pressure represents absolute pressure unless otherwise stated.

(4) Conditions for ignition energy

Ignition energy: 30 J (Tables 1 to 5)
Ignition energy: 500 J (Table 6)

The ignition energy was optimized by adjusting the voltage, current, and time in such a manner that disproportionation is most likely to occur under the same amount of heat.

(5) Results

As shown in the table below, by adjusting the kinds and proportions of a refrigerant that undergoes disproportionation and a refrigerant that does not undergo disproportionation in a mixed refrigerant to be used in the air-conditioning system and adjusting the temperature and pressure conditions under which the mixed refrigerant was to be used, the conditions under which a disproportionation reaction is suppressed (the results shown as "o") and the conditions under which a disproportionation reaction occurs (the results shown as "x") separate from each other.

Results "o" in the table: conditions under which a disproportionation reaction is suppressed
Results "x" in the table: conditions under which a disproportionation reaction occurs.

(6) Ignition energy in Tables 1 to 5: 30 J

Table 1

| Test conditions | | | | | | | | Results |
|---|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log (mol/m$^3$)] | log (thermal diffusivity of the entire refrigerant in the composition) [log (mm$^2$/s)] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 70 | 0 | 30 | 0 | 50 | 2.00 | 2.9004 | -0.6907 | ○ |
| 58 | 0 | 42 | 0 | 100 | 2.10 | 2.7552 | -0.5139 | ○ |
| 55 | 0 | 45 | 0 | 100 | 3.00 | 2.9361 | -0.7417 | ○ |
| 53 | 0 | 47 | 0 | 100 | 3.89 | 3.0897 | -0.9466 | ○ |
| 50 | 0 | 50 | 0 | 100 | 4.50 | 3.1858 | -1.1089 | ○ |
| 51 | 0 | 49 | 0 | 100 | 4.75 | 3.2359 | -1.1706 | ○ |
| 50 | 0 | 50 | 0 | 100 | 5.00 | 3.2808 | -1.2500 | ○ |
| 70 | 0 | 30 | 0 | 150 | 1.47 | 2.5526 | -0.1556 | ○ |
| 60 | 0 | 40 | 0 | 150 | 2.10 | 2.6823 | -0.3534 | ○ |
| 54 | 0 | 46 | 0 | 150 | 3.00 | 2.8276 | -0.5515 | ○ |
| 54 | 0 | 46 | 0 | 150 | 3.00 | 2.8276 | -0.5515 | ○ |
| 30 | 0 | 70 | 0 | 150 | 4.00 | 2.7961 | -0.7889 | ○ |
| 50 | 0 | 50 | 0 | 150 | 4.16 | 2.9761 | -0.7430 | ○ |
| 45 | 0 | 55 | 0 | 150 | 5.00 | 3.0480 | -0.8707 | ○ |
| 60 | 0 | 40 | 0 | 180 | 2.00 | 2.6198 | -0.2575 | ○ |
| 52 | 0 | 48 | 0 | 180 | 3.00 | 2.7708 | -0.4741 | ○ |
| 35 | 0 | 65 | 0 | 100 | 3.50 | 2.9078 | -0.9444 | ○ |
| 35 | 0 | 65 | 0 | 180 | 3.00 | 2.6456 | -0.5229 | ○ |
| 45 | 0 | 55 | 0 | 180 | 5.00 | 2.9842 | -0.7590 | ○ |

Table 2

| Composition (mass%) | | | | Temperature (°C) | Pressure (MPa) (absolute pressure) | log (concentration of refrigerant that undergoes disproportionation in gas phase of the composition) [log (mol/m³)] | log (thermal diffusivity of the entire refrigerant in the composition) [log (mm²/s)] | Results |
|---|---|---|---|---|---|---|---|---|
| Refrigerant that undergoes disproportionation | | Refrigerant that does not undergo disproportionation | | | | | | |
| HFO-1132(E) | HFO-1123 | HFO-1234yf | HFC-32 | | | | | |
| 70 | 0 | 0 | 30 | 50 | 3.00 | 3.0551 | -0.9481 | ○ |
| 70 | 0 | 0 | 30 | 50 | 3.30 | 3.9388 | -1.0991 | ○ |
| 70 | 0 | 0 | 30 | 100 | 1.60 | 2.5719 | -0.2464 | ○ |
| 50 | 0 | 0 | 50 | 100 | 5.00 | 3.0281 | -0.9338 | ○ |
| 70 | 0 | 0 | 30 | 150 | 2.00 | 2.6055 | -0.2139 | ○ |
| 70 | 0 | 0 | 30 | 150 | 2.50 | 2.7115 | -0.3254 | ○ |
| 50 | 0 | 0 | 50 | 150 | 5.00 | 2.8937 | -0.6846 | ○ |
| 70 | 0 | 0 | 30 | 180 | 2.00 | 2.5680 | -0.1392 | ○ |
| 70 | 0 | 0 | 30 | 180 | 2.00 | 2.5680 | -0.1392 | ○ |
| 100 | 0 | 0 | 0 | 50 | 1.00 | 2.6155 | -0.1707 | × |
| 100 | 0 | 0 | 0 | 50 | 3.00 | 3.2480 | -0.9692 | × |
| 100 | 0 | 0 | 0 | 150 | 1.00 | 2.4719 | 0.1032 | × |
| 100 | 0 | 0 | 0 | 150 | 1.00 | 2.4719 | 0.1032 | × |
| 100 | 0 | 0 | 0 | 150 | 1.20 | 2.5549 | 0.0186 | × |
| 100 | 0 | 0 | 0 | 150 | 1.20 | 2.5549 | 0.0186 | × |
| 100 | 0 | 0 | 0 | 150 | 1.20 | 2.5549 | 0.0186 | × |
| 100 | 0 | 0 | 0 | 150 | 1.20 | 2.5505 | 0.0186 | × |
| 100 | 0 | 0 | 0 | 150 | 2.00 | 2.7921 | -0.2255 | × |
| 100 | 0 | 0 | 0 | 150 | 3.00 | 2.9880 | -0.4305 | × |
| 100 | 0 | 0 | 0 | 150 | 3.00 | 2.9880 | -0.4305 | × |

(continued)

| Test conditions | | | | | | | | Results |
|---|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log (mol/m$^3$)] | log (thermal diffusivity of the entire refrigerant in the composition) [log (mm$^2$/s)] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 100 | 0 | 0 | 0 | 150 | 3.00 | 2.9880 | -0.4305 | × |
| 100 | 0 | 0 | 0 | 150 | 5.00 | 3.2512 | -0.7129 | × |
| 100 | 0 | 0 | 0 | 150 | 5.00 | 3.2512 | -0.7129 | × |
| 100 | 0 | 0 | 0 | 180 | 1.00 | 2.4386 | 0.1650 | × |

Table 3

| Test conditions | | | | | | | | Results |
|---|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log (mol/m$^3$)] | log (thermal diffusivity of the entire refrigerant in the composition) [log (mm$^2$/s)] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 70 | 0 | 30 | 0 | 100 | 2.50 | 2.8973 | -0.5794 | × |
| 57 | 0 | 43 | 0 | 100 | 3.81 | 3.0932 | -0.9116 | × |
| 60 | 0 | 40 | 0 | 100 | 4.04 | 3.1448 | -0.9492 | × |
| 54 | 0 | 46 | 0 | 100 | 4.25 | 3.1572 | -1.0244 | × |
| 72 | 0 | 28 | 0 | 100 | 4.60 | 3.2749 | -1.0202 | × |
| 55 | 0 | 45 | 0 | 100 | 4.75 | 3.2500 | -1.1437 | × |
| 55 | 0 | 45 | 0 | 100 | 5.00 | 3.2960 | -1.2087 | × |
| 90 | 0 | 10 | 0 | 150 | 1.50 | 2.6320 | -0.1195 | × |
| 90 | 0 | 10 | 0 | 150 | 2.00 | 2.7668 | -0.2584 | × |
| 70 | 0 | 30 | 0 | 150 | 2.50 | 2.8096 | -0.4154 | × |
| 70 | 0 | 30 | 0 | 150 | 3.00 | 2.8998 | -0.5094 | × |
| 70 | 0 | 30 | 0 | 150 | 3.00 | 2.8998 | -0.5094 | × |
| 70 | 0 | 30 | 0 | 150 | 3.00 | 2.8998 | -0.5094 | × |
| 61 | 0 | 39 | 0 | 150 | 3.00 | 2.8624 | -0.5325 | × |
| 70 | 0 | 30 | 0 | 150 | 3.60 | 2.9926 | -0.6069 | × |
| 55 | 0 | 45 | 0 | 150 | 4.00 | 2.9823 | -0.7057 | × |
| 50 | 0 | 50 | 0 | 150 | 4.26 | 2.9890 | -0.7567 | × |
| 55 | 0 | 45 | 0 | 150 | 5.00 | 3.1046 | -0.8366 | × |
| 90 | 0 | 10 | 0 | 150 | 6.00 | 3.3302 | -0.8456 | × |
| 70 | 0 | 30 | 0 | 180 | 2.50 | 2.7683 | -0.3402 | × |

| Test conditions | | | | | | | Results |
|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log $(mol/m^3)$] | log (thermal diffusivity of the entire refrigerant in the composition) [log $(mm^2/s)$] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 58 | 0 | 42 | 0 | 180 | 3.00 | 2.8030 | -0.4585 | × |
| 57 | 0 | 43 | 0 | 180 | 4.00 | 2.9399 | -0.6061 | × |
| 46 | 0 | 54 | 0 | 180 | 4.92 | 2.9825 | -0.7402 | × |

Table 4

| Test conditions | | | | | | | | Results |
|---|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log (mol/m$^3$)] | log (thermal diffusivity of the entire refrigerant in the composition) [log (mm$^2$/s)] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 80 | 0 | 0 | 20 | 50 | 3.00 | 3.1247 | -0.9551 | × |
| 70 | 0 | 0 | 30 | 100 | 3.50 | 2.9757 | -0.6906 | × |
| 70 | 0 | 0 | 30 | 100 | 4.00 | 3.0537 | -0.7804 | × |
| 70 | 0 | 0 | 30 | 150 | 3.00 | 2.8001 | -0.4191 | × |
| 0 | 90 | 10 | 0 | 150 | 1.50 | 2.6209 | -0.1843 | ○ |
| 0 | 70 | 30 | 0 | 150 | 2.50 | 2.7822 | -0.4715 | ○ |
| 0 | 70 | 30 | 0 | 150 | 2.50 | 2.7822 | -0.4715 | ○ |
| 0 | 50 | 50 | 0 | 150 | 5.34 | 3.0723 | -0.9416 | ○ |
| 0 | 100 | 0 | 0 | 150 | 1.50 | 2.6530 | -0.1652 | × |
| 0 | 90 | 10 | 0 | 150 | 2.50 | 2.8604 | -0.4298 | × |
| 0 | 70 | 30 | 0 | 150 | 3.00 | 2.8717 | -0.5641 | × |
| 0 | 75 | 25 | 0 | 150 | 3.48 | 2.9676 | -0.6302 | × |
| 0 | 70 | 30 | 0 | 150 | 3.50 | 2.9492 | -0.6447 | × |
| 0 | 70 | 30 | 0 | 150 | 4.00 | 3.0180 | -0.7168 | × |
| 0 | 65 | 35 | 0 | 150 | 5.00 | 3.1150 | -0.8567 | × |
| 0 | 65 | 35 | 0 | 150 | 5.00 | 3.1150 | -0.8567 | × |
| 30 | 30 | 40 | 0 | 150 | 5.00 | 3.1090 | -0.8396 | ○ |
| 30 | 30 | 40 | 0 | 130 | 4.00 | 3.0308 | -0.7894 | ○ |
| 25 | 25 | 50 | 0 | 150 | 5.00 | 3.0566 | -0.8717 | × |
| 25 | 25 | 50 | 0 | 150 | 3.00 | 2.7843 | -0.5842 | × |

(continued)

| Test conditions | | | | | | | | Results |
|---|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log $(mol/m^3)$] | log (thermal diffusivity of the entire refrigerant in the composition) [log $(mm^2/s)$] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 93 | 7 | 0 | 0 | 150 | 1.27 | 2.580517788 | -0.023703104 | × |
| 80 | 20 | 0 | 0 | 150 | 1.35 | 2.607947373 | -0.059550163 | × |

Table 5

| Test conditions | | | | | | | | | | Results |
|---|---|---|---|---|---|---|---|---|---|---|
| Composition (mass%) | | | | | | Temperature (°C) | Pressure (MPa) (absolute pressure) | log (concentration of refrigerant that undergoes disproportionation in gas phase of the composition) [log (mol/m³)] | log (thermal diffusivity of the entire refrigerant in the composition) [log (mm²/s)] | |
| Refrigerant that undergoes disproportionation | | Refrigerant that does not undergo disproportionation | | | | | | | | |
| HFO-1132(E) | HFO-1132a | HFO-1243zf | | | R290 | | | | | |
| 93 | 7 | 0 | 0 | 0 | 0 | 150 | 1.27 | 2.5795 | -0.0159 | × |
| 80 | 20 | 0 | 0 | 0 | 0 | 150 | 1.35 | 2.6052 | -0.0372 | × |
| 93 | 0 | 7 | 0 | 0 | 0 | 150 | 1.27 | 2.5601 | -0.0340 | × |
| 80 | 0 | 20 | 0 | 0 | 0 | 150 | 1.35 | 2.5438 | -0.0899 | ○ |
| 85 | 0 | 0 | 15 | 0 | 0 | 150 | 1.27 | 2.5573 | -0.0389 | × |
| 70 | 0 | 0 | 30 | 0 | 0 | 150 | 1.35 | 2.5540 | -0.0917 | ○ |
| 93 | 0 | 0 | 0 | 7 | 0 | 150 | 1.27 | 2.5562 | -0.0187 | × |
| 80 | 0 | 0 | 0 | 20 | 0 | 150 | 1.35 | 2.5320 | -0.0448 | ○ |
| 93 | 0 | 0 | 0 | 0 | 7 | 150 | 1.27 | 2.5366 | -0.0215 | × |
| 80 | 0 | 0 | 0 | 0 | 20 | 150 | 1.35 | 2.4766 | -0.0534 | ○ |

In Tables 1 to 5, the conditions under which a disproportionation reaction is suppressed at an ignition energy of 30 J are shown as "o" in evaluation, whereas the conditions under which a disproportionation reaction occurs are shown as "×" in evaluation.

(7) Ignition energy in Table 6: 500 J

Table 6

| Test conditions | | | | | | | Results |
|---|---|---|---|---|---|---|---|
| Composition (mass%) | | | | Temperature (°C) | Pressure (MPa) (absolute pressure) | log (concentration of refrigerant that undergoes disproportionation in gas phase of the composition) [log (mol/m$^3$)] | log (thermal diffusivity of the entire refrigerant in the composition) [log (mm$^2$/s)] | |
| Refrigerant that undergoes disproportionation | | Refrigerant that does not undergo disproportionation | | | | | | |
| HFO-1132(E) | HFO-1123 | HFO-1234yf | HFC-32 | | | | | |
| 100 | 0 | 0 | 0 | 150 | 0.42 | 2.0866 | 0.4933 | △ |
| 40 | 0 | 60 | 0 | 150 | 5.00 | 3.0133 | -0.8884 | △ |
| 35 | 0 | 65 | 0 | 150 | 5.00 | 2.9726 | -0.9075 | ○ |
| 30 | 0 | 70 | 0 | 150 | 5.00 | 2.9241 | -0.9280 | ○ |
| 25 | 0 | 75 | 0 | 150 | 5.00 | 2.8646 | -0.9504 | ○ |
| 20 | 0 | 80 | 0 | 150 | 5.00 | 2.7889 | -0.9726 | ○ |
| 0 | 40 | 60 | 0 | 150 | 5.00 | 2.9621 | -0.9343 | ○ |
| 0 | 100 | 0 | 0 | 150 | 1.00 | 2.4689 | 0.0220 | △ |
| 0 | 70 | 30 | 0 | 150 | 5.00 | 3.1639 | -0.8430 | △ |

In Table 6, the conditions under which a disproportionation reaction is suppressed at an ignition energy of 500 J are shown as "o" in evaluation, which represents more preferred conditions under which a disproportionation reaction is suppressed. In Table 6, the conditions under which a disproportionation reaction occurs at an ignition energy of 500 J, which are shown as "△" in evaluation, fall within the range of conditions under which a disproportionation reaction is suppressed at an ignition energy of 30 J, which are shown as "o" in evaluation. Since the conditions under which a disproportionation reaction occurs at an ignition energy of 500 J, which are shown as "△" in evaluation, are conditions within an allowable range in which a disproportionation reaction is suppressed in the present disclosure, such conditions are referred to as "Reference Examples" in the present disclosure.

Based on the results, the conditions under which a disproportionation reaction is suppressed (the results shown as "o" in evaluation) and the conditions under which a disproportionation reaction occurs (the results shown as "×" in evaluation) are plotted on a graph wherein the y-axis represents thermal diffusivity (mm$^2$/s) of the entire refrigerant, whereas the x-axis represents a concentration (mol/m$^3$) of the refrigerant that undergoes disproportionation in a gas phase of the composition (Fig. 2), whereby the boundary between these two conditions can be expressed according to an approximate formula as follows.

(8) Discussion of results

Based on the results, the following assessment can be made. For example, if a composition containing a refrigerant is used in an air-conditioning system wherein the refrigerant comprises a refrigerant that undergoes disproportionation, such as HFO-1132(E), HFO-1132a, or HFO-1123, and a refrigerant that does not undergo disproportionation, such as HFO-1234yf, HFC-32, HFO-1243zf, trifluoroiodomethane (CF$_3$I), PFC-14, or propane, and if the air-conditioning system is operated under conditions in which the refrigerant that undergoes disproportionation and the refrigerant that does not undergo disproportionation are positioned on the negative side in the y-axis direction (the region occupied by "o", which is on the lower-left side of the graph) relative to a straight line represented by formula:

$$y <-1.5761x + 3.9516,$$

which applies when the air-conditioning system is operated at an assumed ignition energy of 30 J, or relative to a straight line represented by formula:

$$y <-1.4941x + 3.6044,$$

which applies when the air-conditioning system is operated at an assumed ignition energy of 500 J, wherein x represents a common logarithm (log) of a concentration (mol/m$^3$) of the refrigerant that undergoes disproportionation in a gas phase of the composition, and y represents a common logarithm (log) of thermal diffusivity (mm$^2$/s) of the entire refrigerant in the composition (the sum of the refrigerant that undergoes disproportionation and the refrigerant that does not undergo disproportionation), the composition in the air-conditioning system can be evaluated as suppressing disproportionation of the refrigerant.

**Claims**

1. A composition comprising a refrigerant,

   wherein the refrigerant comprises a refrigerant that undergoes disproportionation and a refrigerant that does not undergo disproportionation,
   the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
   the refrigerant satisfies the range represented by the formula:

   $$y < -1.5761x + 3.9516,$$

   wherein x represents a common logarithm (log) of a concentration (mol/m$^3$) of the refrigerant that undergoes disproportionation in a gas phase of the composition, and

y represents a common logarithm (log) of thermal diffusivity (mm$^2$/s) of the entire refrigerant in the composition.

2. A composition comprising a refrigerant,

wherein the refrigerant comprises a refrigerant that undergoes disproportionation and a refrigerant that does not undergo disproportionation,
the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

3. The composition according to claim 1 or 2,
wherein the refrigerant that does not undergo disproportionation comprises at least one component selected from the group consisting of 3,3,3-trifluoropropene (HFO-1243zf), trifluoroiodomethane (CF$_3$I), difluoromethane (HFC-32), 2,3,3,3-tetrafluoropropene (HFO-1234yf), trans-1,3,3,3-tetrafluoropropene (HFO-1234ze(E)), hexafluoropropene (FO-1216), perfluoromethane (PFC-14), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), cis-1,2,3,3,3-pentafluoropropene (HFO-1225ye(Z)), trans-1,2,3,3,3-pentafluoropropene (HFO-1225ye(E)), CF$_3$SCF$_3$, propane, cyclopropane, propylene, isobutene, isobutane, carbon dioxide, and ammonia.

4. The composition according to any one of claims 1 to 3, which is for use as a refrigeration oil-containing working fluid, the composition further comprising a refrigeration oil.

5. The composition according to claim 4, wherein the refrigeration oil contains at least one polymer selected from the group consisting of polyalkylene glycol (PAG), polyol ester (POE), polyvinyl ether (PVE), silicone oil, and fluorine-containing oil.

6. The composition according to any one of claims 1 to 5, which is for use in an air-conditioning system.

7. An air-conditioning system comprising the composition of any one of claims 1 to 6.

8. A refrigeration method comprising operating a refrigeration cycle using the composition of any one of claims 1 to 6.

9. A method for operating a refrigeration apparatus that operates a refrigeration cycle using the composition of any one of claims 1 to 6.

10. A refrigeration apparatus comprising the composition of any one of claims 1 to 6.

11. The refrigeration apparatus according to claim 10, which is an air-conditioning system, a refrigerator, a freezer, a water cooler, an ice maker, a refrigerated showcase, a freezing showcase, a freezing and refrigerating unit, a refrigerating machine for freezing and refrigerating warehouses, an air-conditioning system for vehicles, a turbo refrigerating machine, or a screw refrigerating machine.

12. A method for storing a composition comprising a refrigerant,

the refrigerant comprising a refrigerant that undergoes disproportionation and a refrigerant that does not undergo disproportionation, and
the refrigerant that undergoes disproportionation comprising at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114),

the method comprising setting the refrigerant to satisfy the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

13. A method for storing a composition comprising a refrigerant,

the refrigerant comprising a refrigerant that undergoes disproportionation and a refrigerant that does not undergo disproportionation, and
the refrigerant that undergoes disproportionation comprising at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114),
the method comprising setting the refrigerant to satisfy the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

14. A method for mixing refrigerants,

the method comprising mixing a refrigerant that undergoes disproportionation and a refrigerant that does not undergo disproportionation as the refrigerants,
wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.5761x + 3.9516,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

15. A method for mixing refrigerants,

the method comprising mixing a refrigerant that undergoes disproportionation and a refrigerant that does not undergo disproportionation as the refrigerants,
wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and
the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and
y represents a common logarithm (log) of thermal diffusivity (mm$^2$/s) of the entire refrigerant in the composition.

16. A method for suppressing a disproportionation reaction of a refrigerant,

the method comprising mixing a refrigerant that undergoes disproportionation and a refrigerant that does not undergo disproportionation as the refrigerant,

wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and the refrigerant satisfies the range represented by the formula:

$$y < -1.5761x + 3.9516,$$

wherein x represents a common logarithm (log) of a concentration (mol/m$^3$) of the refrigerant that undergoes disproportionation in a gas phase of the composition, and

y represents a common logarithm (log) of thermal diffusivity (mm$^2$/s) of the entire refrigerant in the composition.

**17.** A method for suppressing a disproportionation reaction of a refrigerant,

the method comprising mixing a refrigerant that undergoes disproportionation and a refrigerant that does not undergo disproportionation as the refrigerant,

wherein the refrigerant that undergoes disproportionation comprises at least one component selected from the group consisting of trans-1,2-difluoroethylene (HFO-1132(E)), cis-1,2-difluoroethylene (HFO-1132(Z)), 1,1-difluoroethylene (HFO-1132a), trifluoroethylene (HFO-1123), and tetrafluoroethylene (FO-1114), and the refrigerant satisfies the range represented by the formula:

$$y < -1.4941x + 3.6044,$$

wherein x represents a common logarithm (log) of a concentration (mol/m$^3$) of the refrigerant that undergoes disproportionation in a gas phase of the composition, and

y represents a common logarithm (log) of thermal diffusivity (mm$^2$/s) of the entire refrigerant in the composition.

Fig.1

Fig.2

X A disproportionation reaction occurs.

O A disproportionation reaction is suppressed.

$y = -1.5761x + 3.9516$

log (concentration (mol/m³) of the refrigerant that undergoes disproportionation in a gas phase)

log (thermal diffusivity (mm²/s) of the entire refrigerant)

# EP 4 227 390 A1

<table>
<tr><td colspan="2" align="center"><strong>INTERNATIONAL SEARCH REPORT</strong></td><td colspan="2">International application No.<br><strong>PCT/JP2021/037080</strong></td></tr>
</table>

**A.    CLASSIFICATION OF SUBJECT MATTER**

*C10N 30/00*(2006.01)n; *C10N 40/30*(2006.01)n; **C10M 105/38**(2006.01)i; **C10M 107/24**(2006.01)i; **C10M 107/34**(2006.01)i; **C10M 107/38**(2006.01)i; **C10M 107/50**(2006.01)i; **F25B 1/00**(2006.01)i; **C09K 5/04**(2006.01)i

FI:    C09K5/04 F; C09K5/04 E; C09K5/04 B; C09K5/04 A; C10M107/34; C10M105/38; C10M107/24; C10M107/50; C10M107/38; F25B1/00 396Z; C09K5/04 C; F25B1/00 396T; F25B1/00 396U; C10N40:30; C10N30:00 Z

According to International Patent Classification (IPC) or to both national classification and IPC

**B.    FIELDS SEARCHED**

Minimum documentation searched (classification system followed by classification symbols)

    C10N30/00; C10N40/30; C10M105/38; C10M107/24; C10M107/34; C10M107/38; C10M107/50; F25B1/00; C09K5/04

Documentation searched other than minimum documentation to the extent that such documents are included in the fields searched

    Published examined utility model applications of Japan 1922-1996
    Published unexamined utility model applications of Japan 1971-2021
    Registered utility model specifications of Japan 1996-2021
    Published registered utility model applications of Japan 1994-2021

Electronic data base consulted during the international search (name of data base and, where practicable, search terms used)

    CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | WO 2015/125884 A1 (ASAHI GLASS CO., LTD.) 27 August 2015 (2015-08-27) examples, paragraphs [0022], [0030]-[0149], [0169]-[0173] | 1-17 |
| X | WO 2015/186671 A1 (ASAHI GLASS CO., LTD.) 10 December 2015 (2015-12-10) examples, paragraphs [0020], [0024]-[0109], [0116]-[0120] | 1-17 |
| X | JP 2019-214720 A (DAIKIN INDUSTRIES, LTD.) 19 December 2019 (2019-12-19) paragraphs [0021]-[0043], [0081], [0091]-[0096] | 1-17 |

☐ Further documents are listed in the continuation of Box C.        ☑ See patent family annex.

|   |   |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **29 November 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/037080**

| Patent document cited in search report | | | Publication date (day/month/year) | Patent family member(s) | | | Publication date (day/month/year) |
|---|---|---|---|---|---|---|---|
| WO | 2015/125884 | A1 | 27 August 2015 | US | 2016/0355719 | A1 | |
| | | | | examples, paragraphs [0026], [0038]-[0206], [0226]-[0233] | | | |
| | | | | EP | 3109302 | A1 | |
| | | | | CN | 106062159 | A | |
| WO | 2015/186671 | A1 | 10 December 2015 | US | 2017/0058172 | A1 | |
| | | | | examples, paragraphs [0020], [0025]-[0115], [0123]-[0130] | | | |
| | | | | EP | 3153567 | A1 | |
| | | | | CN | 106414682 | A | |
| JP | 2019-214720 | A | 19 December 2019 | EP | 3808828 | A1 | |
| | | | | examples, paragraphs [0021]-[0044], [0081], [0091]-[0096] | | | |
| | | | | WO | 2019/240205 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015145452 A
- JP 2015214927 A

- JP 2018112396 A